# FASCICULE DE BREVET EUROPEEN

(11) **EP 0 805 296 B1**
(45) Date de publication et mention de la délivrance du brevet: **10.01.2001**
(21) Numéro de dépôt: 97400950.8
(22) Date de dépôt: 28.04.1997
(51) Int. Cl.: F16L 3/12

(54) **Assemblage comprenant un conduit de transfert de fluide et un dispositif de fixation de celui-ci sur un support**
Einrichtung mit einer Flüssigkeitstransportleitung und einer Vorrichtung zum Befestigen dieselbe auf einem Träger
Assembly of fluid transport line with a device for fastening the same to a support

(30) Priorité: 03.05.1996 FR 9605556; 19.06.1996 FR 9607605
(43) Date de publication de la demande: 05.11.1997
(73) Titulaire: HUTCHINSON, 75008 Paris (FR)
(72) Inventeur: Faillu, Jean-Luc, 45700 Villemandeur (FR); Andre, Maxime, 45220 Chateau Renard (FR)
(74) Mandataire: Ramey, Daniel

(56) Documents cités:
- EP-A- 0 085 618
- DE-A- 3 315 764
- DE-A- 3 344 111
- DE-U- 8 509 396

## Description

L'invention concerne un assemblage comprenant un conduit de transfert de fluide et un dispositif de fixation de celui-ci, en particulier dans un véhicule automobile.

Ces conduits servent à transporter des fluides à des températures et/ou des pressions qui peuvent être relativement élevées (par exemple dans les circuits de direction assistée, de climatisation, de freinage, de refroidissement, de suralimentation, etc...), et sont en général formés de tuyaux en matière à base de caoutchouc ou d'élastomère qui sont montés sur des embouts rigides pour être reliés aux organes ou aux appareils qu'ils doivent alimenter en fluide. Les dispositifs qui sont utilisés pour la fixation de ces conduits sur des supports ont soit une structure très simple et peu coûteuse mais tout à fait incapable d'empêcher la transmission du bruit et des vibrations, soit une structure anti-vibratoire, qui est alors lourde, complexe et coûteuse.

Un tel système est connu du document DE- 33 15 764 A.

L'invention a pour but d'apporter une solution simple, efficace et économique au problème de la fixation des conduits de transfert de fluide sur des supports, en particulier dans un véhicule automobile.

Elle propose à cet effet un tel dispositif caractérisé en ce qu'il comprend une patte de fixation en matière plastique cellulaire rigide surmoulée sur une partie rigide du conduit avec interposition d'une couche de matière d'absorption des vibrations.

Le surmoulage d'une matière plastique cellulaire sur le conduit permet de réaliser simplement et économiquement une patte de fixation sans risque d'endommager le conduit, grâce au fait que la pression d'injection d'une matière cellulaire (ou cellularisable) est beaucoup plus faible que celle d'une matière plastique compacte.

Dans un mode de réalisation préféré de l'invention, le conduit est formé d'un tuyau à base de caoutchouc, d'élastomère ou de matière analogue dont l'extrémité est montée sur un embout rigide et est maintenue en place par une bague surmoulée en matière plastique cellulaire, cette bague et la patte de fixation précitée étant réalisées dans la même matière au cours de la même opération de surmoulage.

La bague et la patte de fixation peuvent être séparées et indépendantes l'une de l'autre, ou bien reliées l'une à l'autre par de la matière cellulaire surmoulée ou encore formées par une seule et même pièce qui remplit les fonctions de fixation du tuyau sur l'embout et de fixation de l'ensemble tuyau-embout sur un support.

Dans ce dernier cas, la patte de fixation est montée sur l'embout rigide par l'intermédiaire du tuyau en caoutchouc ou en élastomère qui absorbe au moins en partie les vibrations et réduit leur transmission.

Les mêmes résultats d'absorption des vibrations peuvent être obtenus lorsque la patte de fixation est indépendante ou séparée de la bague précitée, grâce à une couche annulaire de matière élastiquement déformable à base de caoutchouc ou d'élastomère qui est interposée entre l'embout et la patte de fixation.

En variante, cette couche de matière d'absorption des vibrations peut être formée par l'extrémité du tuyau enfilée sur l'embout rigide.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

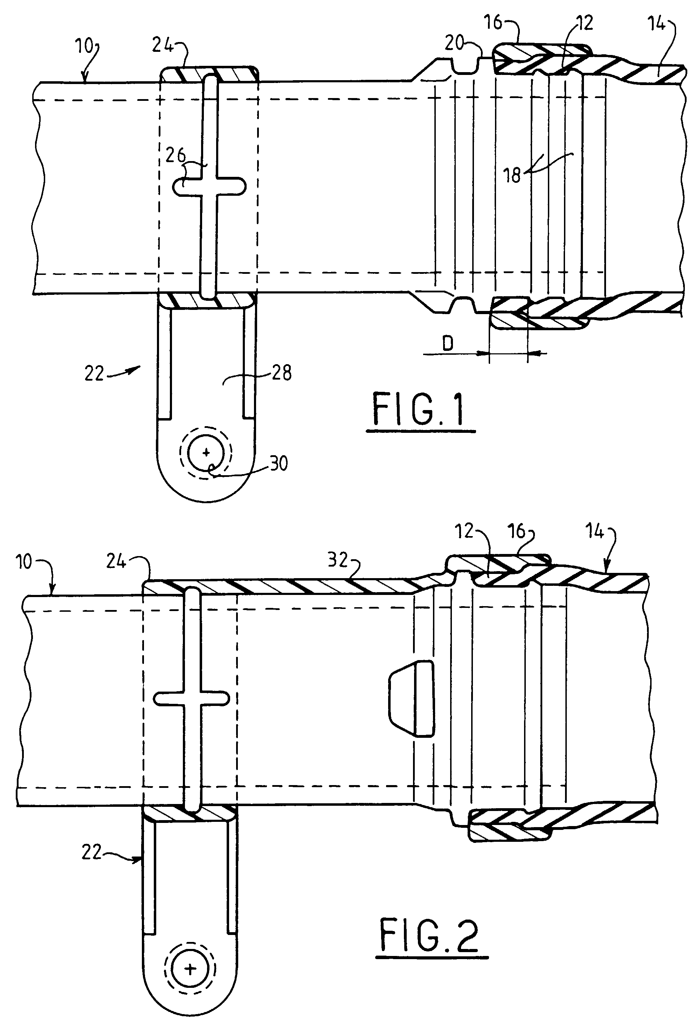

- les figures 1 à 5 sont des vues schématiques partielles en coupe axiale de différents modes de réalisation du dispositif selon l'invention.

En figure 1, la référence 10 désigne un conduit ou un embout tubulaire en matière rigide, notamment en polypropylène, sur l'extrémité duquel est enfilée l'extrémité 12 d'un tuyau 14 de transfert de fluide réalisé à base de caoutchouc, d'élastomère ou de matière analogue, l'extrémité 12 du tuyau étant fixée sur l'extrémité de l'embout 10 par une bague 16 surmoulée en matière plastique cellulaire rigide. L'extrémité de l'embout 10 comporte une ou plusieurs nervures 18 en "sapin" et une butée 20 sur laquelle vient s'appuyer l'extrémité libre du tuyau 14, qui est ainsi immobilisée en translation sur l'embout 10. La distance D entre l'extrémité de la bague 16 et la première nervure 18 doit être supérieure ou égale à une valeur limite, qui est de l'ordre de 30% du diamètre interne du tuyau, pour assurer l'étanchéité et la bonne tenue du tuyau 14 sur l'embout 10.

La cellularisation de la bague 16 dans le moule de surmoulage se traduit par une pression élevée de serrage de l'extrémité 12 du tuyau sur l'extrémité de l'embout 10 et donc par une fixation étanche et sûre du tuyau 14 sur l'embout. Par ailleurs, les pressions et températures d'injection des matières plastiques cellularisables, qui sont typiquement de l'ordre de 100 bars et de 270°C environ, sont bien supportées par l'embout rigide 10 réalisé en une matière plastique telle que du polypropylène par exemple, sans risque de détérioration de l'embout (les moules de surmoulage étant maintenus à une température de l'ordre de 80°C par exemple).

La fixation de l'ensemble embout 10-tuyau 14 sur un support, par exemple sur la caisse d'un véhicule automobile, est assurée par une patte 22 de matière plastique rigide qui est surmoulée sur l'embout 10 à distance de la bague 16, cette patte 22 comprenant une partie cylindrique 24 qui entoure extérieurement l'embout 10 dont la surface extérieure est formée avec une ou plusieurs nervures 26 en saillie (ou avec des rainures en creux) permettant d'immobiliser la patte 22 en rotation et en translation sur l'embout 10.

La patte 22 comprend encore une languette 28 qui s'étend radialement depuis la surface extérieure de la partie cylindrique 24 et qui comporte un insert métallique 30 au voisinage de son extrémité libre, l'insert 30 comprenant un orifice central de passage d'un boulon, d'un rivet ou d'une vis de fixation sur le support.

La patte 22 est réalisée avantageusement dans la même matière plastique cellulaire que la bague 16 et au cours de la même opération de surmoulage. Cette matière plastique peut être un polyamide, tel qu'un polyamide 6, un polyamide 66, un polyamide 4-6, un polyamide semi-aromatique, ou encore du polypropylène, du PBT (poly(térephtalate de butylène)), du POM (polyoxyde de méthylène), ou du PPA (polyphtalamide), avec une charge de fibres de verre ou analogue comprise entre 0 et 50 % environ, et de préférence de l'ordre de 30 % en poids.

L'embout rigide 10 est de préférence en une matière analogue ou compatible, par exemple en polyamide tel qu'un polyamide 6, un polyamide 66, un polyamide 12, un copolymère de polyamide 6 et de polyamide 66, un alliage de polyamide et de propylène, un propylène ou un PBT, avec une charge de fibres de verre ou analogue comprise entre 0 et 30 % environ, de préférence de l'ordre de 20 % en poids.

Le mode de réalisation représenté en figure 2 est identique à celui de la figure 1, à la différence que la bague 16 et la partie cylindrique 24 de la patte de fixation 22 sont reliées par un ou des cordons 32 de matière plastique s'étendant le long de l'embout 10 et venant d'une pièce par moulage avec la bague 16 et la patte 22.

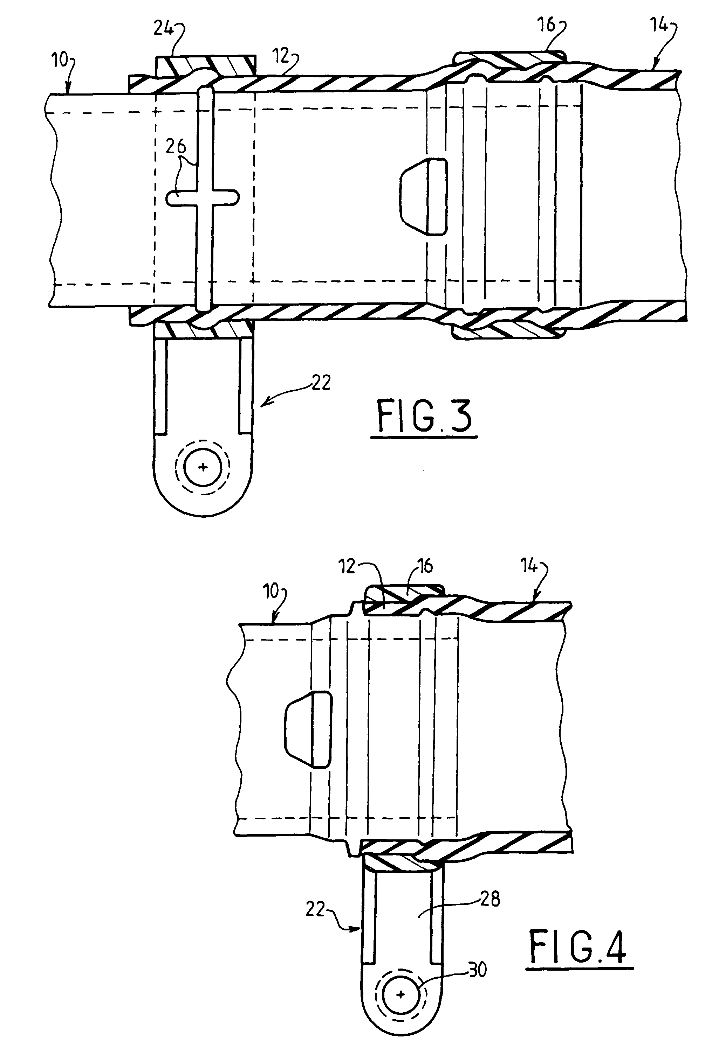

Dans le mode de réalisation de la figure 3, l'extrémité 12 du tuyau 14 est enfilée sur l'embout 10 jusqu'à recouvrir les nervures précitées 26, la patte de fixation 22 étant surmoulée sur la partie de l'extrémité 12 du tuyau qui recouvre les nervures 26.

La cellularisation de la partie cylindrique 24 de la patte 22 dans le moule de surmoulage provoque alors, par augmentation de volume, un serrage radial de l'extrémité 12 du tuyau sur l'embout 10 et sur les nervures 26 de celui-ci. L'épaisseur de caoutchouc ou d'élastomère qui est serrée entre la partie cylindrique 24 et l'embout 10 absorbe, au moins en partie, les vibrations générées ou transmises dans l'embout 10 et empêche leur transmission au support sur lequel l'ensemble embout 10-tuyau 14 est fixé par la patte 22.

Dans le mode de réalisation de la figure 4, la patte 22 et la bague 16 sont formées d'une seule pièce, la languette 28 portant l'embout 30 de fixation étant formée sur la surface extérieure de la bague 16 fixant l'extrémité 12 du tuyau 14 sur l'embout 10.

Comme dans le mode de réalisation précédent, l'épaisseur de caoutchouc ou d'élastomère du tuyau 14 serrée entre la bague 16 et l'embout 10 absorbe une partie des vibrations générées ou transmises par l'embout 10 et empêche leur transmission au support auquel est reliée la patte de fixation 22.

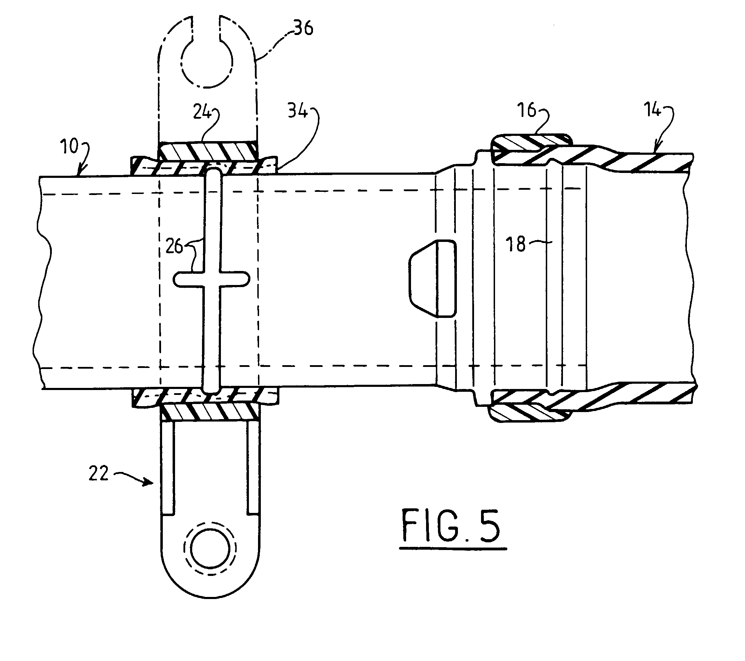

Dans le mode de réalisation de la figure 5, la bague 16 et la patte de fixation 22 sont séparées et indépendantes l'une de l'autre, et un manchon 34 de matière d'absorption des vibrations (caoutchouc, élastomère ou analogue comprenant une couche interne textile de renforcement) est interposé entre l'embout 10 et la partie cylindrique 24 de la patte 22, en recouvrant les nervures 26 formées sur l'embout 10. Des butées peuvent être formées sur la surface extérieure de l'embout 10 de part et d'autre du manchon 34 pour assurer le maintien de celui-ci sur l'embout 10 et l'immobiliser en translation, ces butées pouvant être de forme continue ou discontinue.

En outre et comme représenté en traits fantômes en figure 5, on peut former la patte 22 de moulage avec une partie 36 de passage ou de guidage de câble(s), ou un autre accessoire réalisable en matière plastique moulée.

## Revendications

1. Assemblage comprenant un conduit de transfert de fluide et un dispositif de fixation de celui-ci sur un support, en particulier dans un véhicule automobile, ledit conduit comprenant une partie rigide (10), comprenant une patte (22) de fixation en matière plastique cellulaire rigide surmoulée sur la partie rigide (10) du conduit avec interposition d'une couche (12,34) de matière d'absorption des vibrations, telle que du caoutchouc ou un élastomère, entre la patte (22) et la partie rigide (10) du conduit.

2. Assemblage comprenant un conduit de transfert de fluide et un dispositif de fixation de celui-ci selon la revendication 1, caractérisé en ce que ladite couche de matière d'absorption des vibrations est un manchon (34) entourant extérieurement la partie rigide (10) du conduit.

3. Assemblage comprenant un conduit de transfert de fluide et un dispositif de fixation de celui-ci selon la revendication 1, caractérisé en ce que le conduit comprend également un tuyau (14) à base de caoutchouc ou d'élastomère dont l'extrémité (12) est enfilée sur un embout formant ladite partie rigide (10), et en ce que ladite couche de matière d'absorption des vibrations est formée par l'extrémité (12) du tuyau (14) enfilée sur la partie rigide (10) du conduit.

4. Assemblage comprenant un conduit de transfert de fluide et un dispositif de fixation de celui-ci selon la revendication 3, caractérisé en ce que l'extrémité (12) du tuyau est maintenue sur cet embout par une bague (16) surmoulée réalisée dans la même matière plastique cellulaire que la patte (22) précitée.

5. Assemblage comprenant un conduit de transfert de fluide et un dispositif de fixation de celui-ci selon la revendication 4, caractérisé en ce que la bague (16) et la patte (22) sont séparées et indépendantes l'une de l'autre.

6. Assemblage comprenant un conduit de transfert de fluide et un dispositif de fixation de celui-ci selon la revendication 4, caractérisé en ce que la bague (16) et la patte (22) sont distantes l'une de l'autre et reliées par de la matière plastique cellulaire surmoulée (32).

7. Assemblage comprenant un conduit de transfert de fluide et un dispositif de fixation de celui-ci selon la revendication 4, caractérisé en ce que la bague (16) et la patte (22) sont formées par une même pièce dont une partie cylindrique (16) serre l'extrémité (12) du tuyau (14) sur l'embout (10) et comporte une languette extérieure radiale (28) formant la patte de fixation proprement dite.

8. Assemblage comprenant un conduit de transfert de fluide et un dispositif de fixation de celui-ci selon l'une des revendications 4 à 7, caractérisé en ce que ladite patte (22), ladite bague (16) et ladite couche (12, 34), de matière d'absorption des vibrations sont immobilisées en translation et/ou en rotation par des butées, rainures ou nervures (18,20,26) formées sur la partie rigide (10) du conduit.

9. Assemblage comprenant un conduit de transfert de fluide et un dispositif de fixation de celui-ci selon la revendication 8, caractérisé en ce que la distance (D) entre l'extrémité libre de la bague (16) et la première nervure formée sur l'embout rigide est supérieure à une valeur limite de l'ordre de 30% du diamètre interne du tuyau (14).

10. Assemblage comprenant un conduit de transfert de fluide et un dispositif de fixation de celui-ci selon l'une des revendications précédentes, caractérisé en ce que la partie rigide (10) du conduit est réalisée en polyamide, par exemple en polyamide 6 ou polyamide 66 ou polyamide 12, en polypropylène, en PBT, en alliage PA-PP ou en copolymère PA6-PA66, contenant une charge de fibres de verre ou analogue comprise entre 0 et 30 % environ.

11. Assemblage comprenant un conduit de transfert de fluide et un dispositif de fixation de celui-ci selon l'une des revendications 4 à 10, caractérisé en ce que la bague (16) et/ou la patte de fixation (22) sont réalisées en polyamide, par exemple en polyamide 6 ou en polyamide 66, ou en polyamide 4-6, en polyamide semi-aromatique, en polyphtalamide, en polypropylène, en PBT ou en POM, contenant une charge de fibres de verre ou analogue comprise entre 0 et 50 % environ.

12. Assemblage comprenant un conduit de transfert de fluide et un dispositif de fixation de celui-ci selon l'une des revendications précédentes, caractérisé en ce que ladite patte (22) est formée de moulage avec un accessoire tel par exemple qu'un passe-câble (36).

## Patentansprüche

1. Einrichtung mit einer Flüssigkeitstransportleitung und einer Vorrichtung zur Befestigung derselben auf einem Träger, insbesondere in einem Kraftfahrzeug, wobei die Leitung einen starren Teil (10) umfasst, der eine Befestigungsklaue (22) aus einem starren zellularen Kunststoff aufweist, der auf dem starren Teil (10) der Leitung angebracht ist, wobei eine Schicht (12, 34) aus einem schwingungsabsorbierenden Material, wie beispielsweise Kautschuk oder ein Elastomer, zwischen der Klaue (22) und dem starren Teil (10) der Leitung vorgesehen ist.

2. Einrichtung mit einer Flüssigkeitstransportleitung und einer Vorrichtung zur Befestigung derselben auf einem Träger nach Anspruch 1, dadurch gekennzeichnet, dass die Schicht aus schwingungsabsorbierendem Material eine Hülse (34) ist, die außen den starren Teil (10) der Leitung umgibt.

3. Einrichtung mit einer Flüssigkeitstransportleitung und einer Vorrichtung zur Befestigung derselben auf einem Träger nach Anspruch 1, dadurch gekennzeichnet, dass die Leitung auch ein Rohr (14) auf Basis von Kautschuk oder eines Elastomers umfasst, dessen Ende (12) auf einen Ansatz aufgeschoben ist, der den starren Teil (10) bildet, und dass die Schicht aus schwingungsabsorbierendem Material von dem Ende (12) des Rohrs (14) gebildet wird, das auf den starren Teil (10) der Leitung aufgeschoben ist.

4. Einrichtung mit einer Flüssigkeitstransportleitung und einer Vorrichtung zur Befestigung derselben auf einem Träger nach Anspruch 3, dadurch gekennzeichnet, dass das Ende (12) des Rohrs auf diesem Ansatz durch einen ausgegossenen Ring (16) gehalten wird, der aus demselben zellularen Kunststoff wie die vorgenannte Klaue (22) hergestellt ist.

5. Einrichtung mit einer Flüssigkeitstransportleitung und einer Vorrichtung zur Befestigung derselben auf einem Träger nach Anspruch 4, dadurch gekennzeichnet, dass der Ring (16) und die Klaue (22) getrennt und voneinander unabhängig sind.

6. Einrichtung mit einer Flüssigkeitstransportleitung und einer Vorrichtung zur Befestigung derselben auf einem Träger nach Anspruch 4, dadurch gekennzeichnet, dass der Ring (16) und die Klaue (22) in einem Abstand zueinander angeordnet sind und durch ausgegossenen zellularen Kunststoff (32) verbunden sind.

7. Einrichtung mit einer Flüssigkeitstransportleitung und einer Vorrichtung zur Befestigung derselben auf einem Träger nach Anspruch 4, dadurch gekennzeichnet, dass der Ring (16) und die Klaue (22) von einem selben Stück gebildet werden, dessen zylindrischer Teil (16) das Ende (12) des Rohrs (14) auf dem Ansatz (10) festklemmt und eine radiale Außenlasche (28) umfasst, die die eigentliche Befestigungslasche bildet.

8. Einrichtung mit einer Flüssigkeitstransportleitung und einer Vorrichtung zur Befestigung derselben auf einem Träger nach einem der Ansprüche 4 bis 7, dadurch gekennzeichnet, dass die Klaue (22), der Ring (16) und die Schicht (12, 34) aus schwingungsabsorbierendem Material durch Anschläge, Nuten oder Rippen (18, 20, 26), die auf dem starren Teil (10) der Leitung ausgebildet sind, gegen Translation und/oder Drehung festgestellt werden.

9. Einrichtung mit einer Flüssigkeitstransportleitung und einer Vorrichtung zur Befestigung derselben auf einem Träger nach Anspruch 8, dadurch gekennzeichnet, dass der Abstand (D) zwischen dem freien Ende des Ringes (16) und der ersten, auf dem starren Ansatz ausgebildeten Rippe größer als ein Grenzwert von ungefähr 30 % des Innendurchmessers des Rohrs (14) ist.

10. Einrichtung mit einer Flüssigkeitstransportleitung und einer Vorrichtung zur Befestigung derselben auf einem Träger nach einem der vorhergehenden Ansprüche, dadurch gekennzeichnet, dass der starre Teil (10) der Leitung aus Polyamid, beispielsweise aus Polyamid 6 oder Polyamid 66 oder Polyamid 12, aus Polypropylen, PBT, einer PA-PP-Legierung oder einem PA6-PA66-Copolymer, hergestellt ist, welches eine Glasfasermasse oder dergleichen zwischen 0 und 30 % ungefähr enthält.

11. Einrichtung mit einer Flüssigkeitstransportleitung und einer Vorrichtung zur Befestigung derselben auf einem Träger nach einem der Ansprüche 4 bis 10, dadurch gekennzeichnet, dass der Ring (16) und/oder die Befestigungsklaue (22) aus Polyamid, beispielsweise aus Polyamid 6 oder Polyamid 66, oder aus Polyamid 4-6, aus halbaromatischem Polyamid, aus Polyphtalamid, aus Polypropylen, aus PBT oder POM, hergestellt sind, welches eine Glasfasermasse oder dergleichen zwischen ungefähr 0 und 50 % aufweist.

12. Einrichtung mit einer Flüssigkeitstransportleitung und einer Vorrichtung zur Befestigung derselben auf einem Träger nach einem der vorhergehenden Ansprüche, dadurch gekennzeichnet, dass die Klaue (22) durch Formguß mit einem Zubehör, wie beispielsweise einer Kabeldurchführung (36), geformt wird.

## Claims

1. Assembly comprising a fluid transfer duct and a device for fixing the latter on a support, in particular in an automotive vehicle, the said duct comprising a rigid part (10), comprising a fixing clamp (22) made of rigid cellular plastic material moulded on the rigid section (10) of the duct with insertion of a layer (12,34) of material to absorb vibration such as rubber or an elastomer between the clamp (22) and the rigid section (10) of the duct.

2. Assembly comprising a fluid transfer duct and a device for fixing the latter according to claim 1,
characterised in that the said layer of material to absorb vibration is a sleeve (34) encompassing the exterior of the rigid part (10) of the duct.

3. Assembly comprising a fluid transfer duct and a device for fixing the latter according to claim 1,
characterised in that the duct also comprises a tube (14) made from rubber or elastomer, the end of which (12) is drawn onto a tip forming the said rigid section (10), and in that the said layer of material to absorb vibration is formed by the end (12) of the tube (14) drawn onto the rigid section (10) of the duct.

4. Assembly comprising a fluid transfer duct and a device for fixing the latter according to claim 3,
characterised in that the end (12) of the tube is held on this tip by a moulded ring (16) made from the same cellular plastic material as the clamp (22) quoted above.

5. Assembly comprising a fluid transfer duct and a device for fixing the latter according to claim 4,
characterised in that the ring (16) and the clamp (22) are separated and independent of each other.

6. Assembly comprising a fluid transfer duct and a device for fixing the latter according to claim 4,
characterised in that the ring (16) and the clamp (22) are distant from each other and linked by the moulded cellular plastic material (32).

7. Assembly comprising a fluid transfer duct and a device for fixing the latter according to claim 4,
characterised in that the ring (16) and the clamp (22) are formed by the same piece, a cylindrical section (16?) of which grips the end (12) of the tube (14) on the tip (10) and comprises an exterior radial tongue (28) forming the actual fixing clamp.

8. Assembly comprising a fluid transfer duct and a device for fixing the latter according to one of claims 4 to 7, characterised in that the said clamp (22), the said ring (16) and the said layer (12, 34) of material to absorb vibration cannot move laterally and/or in rotation by stops, grooves or ribs (18,20,26) formed on the rigid section (10) of the duct.

9. Assembly comprising a fluid transfer duct and a device for fixing the latter according to claim 8,
characterised in that the distance (D) between the free end of the ring (16) and the first rib formed on the rigid tip is more than a limit of 30% of the tube's (14) internal diameter.

10. Assembly comprising a fluid transfer duct and a device for fixing the latter according to one of the previous claims, characterised in that the rigid section (10) of the duct is made from polyamide, for example polyamide 6 or polyamide 66 or polyamide 12, polypropylene , PBT, PA- PP blend or copolymer PA6-PA66, containing a charge of glass fibres or similar making up between 0 and 30 % approximately.

11. Assembly comprising a fluid transfer duct and a device for fixing the latter according to one of claims 4 to 10, characterised in that the ring (16) and/or the fixing clamp (22) are made from polyamide, for example polyamide 6 or polyamide 66, or polyamide 4-6, semi-aromatic polyamide, polyphthalamide, polypropylene, PBT or POM, containing a charge of glass fibres or similar making up between 0 and 50% approximately.

12. Assembly comprising a fluid transfer duct and a device for fixing the latter according to one of the previous claims, characterised in that the said clamp (22) is formed as a result of moulding with an accessory such as for example a cable sleeve (36).
